# EUROPEAN PATENT SPECIFICATION

(11) **EP 1 880 619 B1**
(45) Date of publication and mention of the grant of the patent: **07.09.2011**
(21) Application number: 06425507.8
(22) Date of filing: 21.07.2006
(51) Int. Cl.: A23N 12/02

(54) **System for washing fruit and vegetable products**
Vorrichtung zum Reinigen von Obst und Gemüse
Système pour laver les fruits et légumes

(43) Date of publication of application: 23.01.2008
(73) Proprietor: Unitec S.p.A., 48022 Lugo (IT)
(72) Inventor: Benedetti, Angelo, 48020 Savarna (IT)
(74) Representative: Bongiovanni, Simone

(56) References cited:
- EP-A- 0 197 600
- US-A- 1 513 195
- US-A- 4 985 956
- US-A1- 2002 170 575

## Description

The present invention relates to a system for washing fruit and vegetable products, and in particular products in bunches.

Systems for washing singularized fruit and vegetable products normally comprise a tank full of water in which the products are submerged, while systems, such as those disclosed in EP 0197600, US 1513195 and US 4985956, for washing fruit and vegetable products of the type in bunches comprise a washing station in which the products are sprayed with water while they are conveyed and brushed by brushes.

Both types of washing systems described above and currently marketed do not contemplate a correct or efficient washing of the fruit and vegetable products, either singularised or in bunches.

It is the object of the present invention to make a system for washing fruit and vegetable products which is free from the above-mentioned drawbacks, and which ensures an effective washing of the fruit and vegetable products.

According to the present invention a system for washing fruit and vegetable products is made, which comprises:
a conveyor line of said products along a direction and presenting seats for accommodating said products, said seats presenting through windows; and
a washing station defined in a zone of said conveyor line and provided with at least one nozzle for spraying washing water onto said products and at least one pair of brushes adapted to brush said products by means of its bristles the system (1) being characterized in that a first brush (24) of said pair is placed underneath said conveyor line (3) and a second brush (24) of said pair is placed over said conveyor line (3), and in that the brushes (24) of said pair are revolving about respective axes of revolution with the same direction of revolution, as set out in the accompanying claims.

The present invention will now be described with reference to the accompanying drawings illustrating a preferred embodiment thereof, in which:
figure 1 is a side view with parts removed of a system made according to the dictates of the present invention;
figure 2 is a side and partial view of a conveyor line of the system in figure 1; and
figure 3 is a plan view of the conveyor line shown in figure 2.

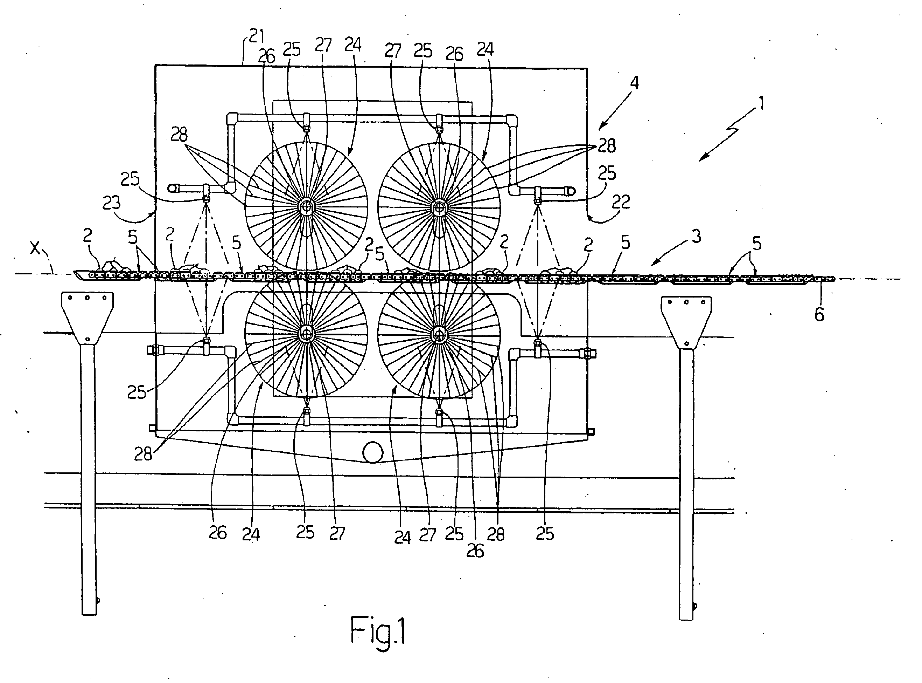

With reference to figure 1, number 1 indicates as a whole a system adapted to accurately wash fruit and vegetable products 2 while they are conveyed. System 1 comprises a conveyor line 3 of products 2 along a direction X and a washing station 4 defined in a zone of conveyor line 3.

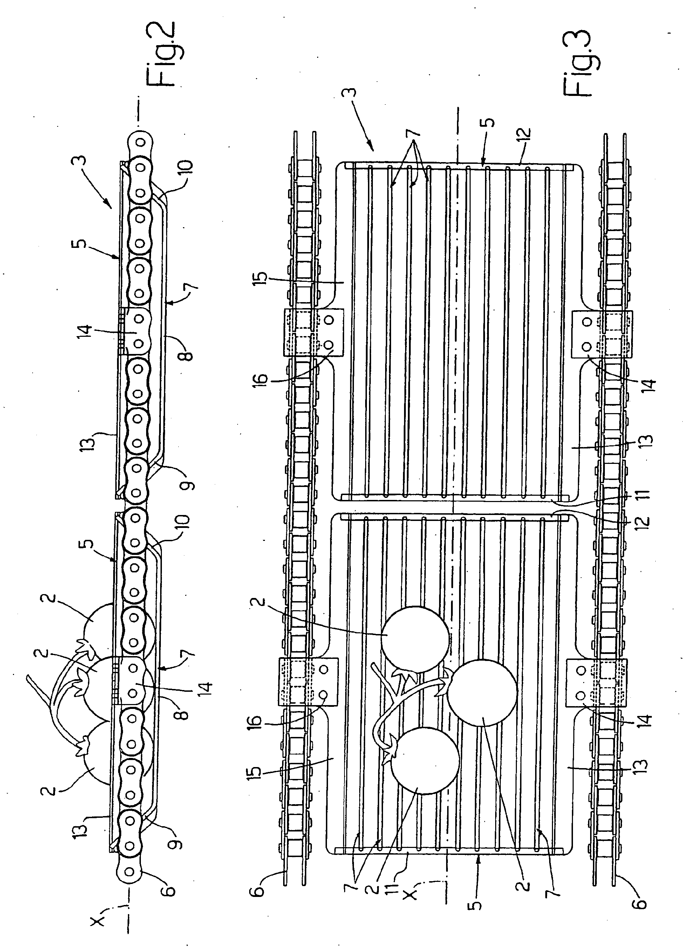

With reference to figures 2 and 3, conveyor line 3 comprises a plurality of trays 5, one subsequent to the other, driven by two chains 6 onto which trays 5 are laterally connected. Each tray 5 comprises a plurality of metallic wires 7 reciprocally parallel and parallel to direction X. Metallic wires 7 present a horizontal central part 8 and two axial end parts 9 and 10 bent upwards (figure 2). The ends of parts 9 are welded to a horizontal metallic wire 11 orthogonal to direction X and the ends of parts 10 are welded to a horizontal metallic wire 12 orthogonal to direction X. A first axial end of wire 11 and a first axial end of wire 12 support a foil 13 to which a bracket 14 is centrally fixed in turn fixed to a first chain 6. A second axial end of wire 11 and a second axial end of wire 12 support a foil 15 to which a bracket 16 is centrally fixed in turn fixed to the second chain 6. As shown in figure 3, the distance between adjacent metallic wires 7 is constant.

With reference to figure 1, washing station 4 comprises:
a box-shaped frame 21 presenting an inlet 22 and an outlet 23 for conveyor line 3;
two pairs of cylindrically shaped revolving brushes 24 with longitudinal horizontal axis defined on a vertical plane orthogonal to direction X; and
a plurality of nozzles 25 through which washing water is sprayed.

Each brush 24 presents a hub 26 keyed to a revolving shaft 27 driven in a way (not shown) by an electrical motor (not shown) and a plurality of bristles 28 arranged in spokes. Each pair of brushes 24 presents a brush 24 placed underneath the conveyor line 3 and a brush 24 arranged over conveyor line 3; brushes 24 of the same pair revolve in the same direction and the two pairs present an opposite direction of revolution. Brushes 24 of each pair present the centre of revolution along the same vertical line and present the same external diameter. Preferably, brushes 24 of the same pair are reciprocally tangent at tray 5 and lower brush 24 presents its bristles 28 which extend within tray 5 through the openings defined between adjacent metallic wires 7. Furthermore, preferably, the longitudinal extension of brushes 24 is essentially equal to the width of tray 5.

With reference to figure 1, washing station 4 presents:
two nozzles 25 adapted to spray washing water towards trays 5 at inlet 22, a nozzle 25 arranged over line 3 and the other under such line 3;
two nozzles 2 for each pair of brushes 24, adapted to spray washing water towards trays 5, a nozzle underneath the corresponding lower brush 24 and the other over the corresponding upper brush 24; and
two nozzles 25 adapted to spray washing water towards trays 5 at outlet 23, a nozzle 25 arranged over line 3 and the other under such line 3.

In use, during the crossing of conveyor line 3 within washing station 4, the conveyed products 2 are sprayed with washing water for the entire time of the crossing. At the same time, the two pairs of brushes 24 act on the skins of products 2 removing soil and other residues existing on the skin itself. Brushes 24 of the same pair turn in the same direction not determining any shift of product 2 along conveyor line 3.

From the above, the advantages obtained by implementing the present invention are apparent.

In particular, a system which accurately and efficiently washes fruit and vegetable products, singularized or in bunches, is made. Such washing occurs without the contribution of personnel by means of an automatic system which contemplates both the spraying of washing water and a double brushing of fruit and vegetable products; brushing allowed by the conformation of the trays accommodating the fruit and vegetable products.

It is finally apparent that changes and variants can be made to system 1 here described and shown without however departing from the protective scope of the present invention.

In particular, the washing station may contemplate the adjustment of the vertical position of brushes 24 so as to account for the dimensions of the fruit and vegetable products to be washed. Furthermore, conveyor line 3 may be shaped differently from that shown and for example such line may consist of seats for accommodating products provided with through windows for allowing the contact between the bristles of the brushes and the fruit and vegetable products.

## Claims

1. A system for washing fruit and vegetable products (2), the system (1) comprising:
a conveyor line (3) of said products (2) along a direction (X) and presenting seats (5) for accommodating said products (2), said seats (5) presenting through windows; and
a washing station (4) defined in a zone of said conveyor line (3) and provided with at least one nozzle (25) for spraying washing water onto said products and at least one pair of brushes (24) adapted to brush said products (2) by means of its bristles (28);
the system (1) being **characterized in that** a first brush (24) of said first pair is placed underneath said conveyor line (3) and a second brush (24) of said first pair is placed over said conveyor line (3), and **in that** the brushes (24) of said first pair are adapted to revolve about respective axes of revolution with the same direction of revolution.

2. A system according to claim 1, **characterised in that** said conveyor line (3) is provided with a plurality of trays (5) for accommodating said products (2); said trays (5) being made of metallic wires (7) equally spaced out with respect to each other and parallel to said direction (X).

3. A system according to claim 1 and/or 2, wherein each brush (24) has a cylindrical conformation with horizontal axis of revolution and laying on a vertical plane orthogonal to said direction (X).

4. A system according to claim 3, wherein said brush (24) has a longitudinal extension essentially equal to the width of said seats (5).

5. A system according to anyone of the foregoing Claims, wherein at least one of said brushes (24) of said first pair has bristles (28) which extend within said seats (5).

6. A system according to anyone of the foregoing Claims, and comprising a further pair of brushes (24) equal to said first pair; the brushes (24) of said further pair being adapted to revolve in the same direction with respect to each other and in an opposite direction with respect of the brushes (24) of said first pair.

## Patentansprüche

1. System zum Waschen von Obst- und Gemüseprodukten (2),
wobei das System (1) folgendes aufweist:
eine Förderstrecke (3) der Produkte (2) entlang einer Richtung (X), wobei die Förderstrecke Aufnahmen (5) zum Aufnehmen der Produkte (2) bietet und die Aufnahmen (5) Durchgangsöffnungen aufweisen; und
eine Waschstation (4), die in einer Zone der Förderstrecke (3) gebildet ist und mit mindestens einer Düse (25) zum Sprühen von Waschwasser auf die Produkte sowie mit mindestens einem Paar von Bürsten (24) ausgestattet ist,
die dazu ausgebildet sind, die Produkte (2) mittels ihrer Borsten (28) zu bürsten;
wobei das System (1) **dadurch gekennzeichnet ist,**
**daß** eine erste Bürste (24) des ersten Paares unter der Förderstrecke (3) angeordnet ist und eine zweite Bürste (24) des ersten Paares über der Förderstrecke (3) angeordnet ist,
und **daß** die Bürsten (24) des ersten Paares dazu ausgebildet sind, sich mit der gleichen Drehrichtung um jeweilige Drehachsen zu drehen.

2. System nach Anspruch 1,
**dadurch gekennzeichnet,**
**daß** die Förderstrecke (3) mit einer Vielzahl von Tabletts (5) zum Aufnehmen der Produkte (2) versehen ist; wobei die Tabletts (5) aus Metalldrähten (7) gebildet sind, die gleichmäßig voneinander beabstandet sind und parallel zu der Richtung (X) verlaufen.

3. System nach Anspruch 1 und/oder 2,
wobei jede Bürste (24) eine zylindrische Gestalt mit einer horizontalen Drehachse aufweist und in einer vertikalen Ebene orthogonal zu der Richtung (X) liegt.

4. System nach Anspruch 3,
wobei die Bürste (24) eine Längserstreckung aufweist, die im wesentlichen gleich der Breite der Aufnahmen (5) ist.

5. System nach einem der vorhergehenden Ansprüche,
wobei mindestens eine der Bürsten (24) des ersten Paares Borsten (28) aufweist, die sich in die Aufnahmen (5) hinein erstrecken.

6. System nach einem der vorhergehenden Ansprüche,
das ein weiteres Paar von Bürsten (24) aufweist, die in gleicher Weise wie das erste Paar ausgebildet sind;
wobei die Bürsten (24) des weiteren Paares dazu ausgebildet sind, sich relativ zueinander in der gleichen Richtung zu drehen und sich relativ zu den Bürsten (24) des ersten Paares in gegenläufiger Richtung zu drehen.

## Revendications

1. Système pour laver des fruits et des légumes (2), le système (1) comprenant :
une ligne de transport (3) desdits produits (2) le long d'une direction (X) et présentant des sièges (5) pour loger lesdits produits (2), lesdits sièges (5) présentant des fenêtres traversantes ; et
une station de lavage (4) définie dans une zone de ladite ligne de transport (3) et prévue avec au moins une buse (25) pour pulvériser l'eau de lavage sur lesdits produits et au moins une paire de brosses (24) adaptées pour brosser lesdits produits (2) au moyen de leurs poils (28) ;
le système (1) étant **caractérisé en ce qu'**une première brosse (24) de ladite première paire est placée au-dessous de ladite ligne de transport (3) et une deuxième brosse (24) de ladite première paire est placée au-dessus de ladite ligne de transport (3), et **en ce que** les brosses (24) de ladite première paire sont adaptées pour tourner autour d'axes de révolution respectifs avec le même sens de révolution.

2. Système selon la revendication 1, **caractérisé en ce que** ladite ligne de transport (3) est prévue avec une pluralité de plateaux (5) pour loger lesdits produits (2) ; lesdits plateaux (5) étant réalisés avec des fils métalliques (7) également espacés les uns par rapport aux autres et parallèles à ladite direction (X).

3. Système selon la revendication 1 et/ou 2, dans lequel chaque brosse (24) a une conformation cylindrique avec l'axe de révolution horizontal et se trouvant sur un plan vertical orthogonal à ladite direction (X).

4. Système selon la revendication 3, dans lequel ladite brosse (24) a une extension longitudinale essentiellement égale à la largeur desdits sièges (5).

5. Système selon l'une quelconque des revendications précédentes, dans lequel au moins l'une desdites brosses (24) de ladite première paire a des poils (28) qui s'étendent à l'intérieur desdits sièges (5).

6. Système selon l'une quelconque des revendications précédentes, et comprenant une paire supplémentaire de brosses (24) identique à ladite première paire ; les brosses (24) de ladite paire supplémentaire étant adaptées pour tourner dans le même sens l'une par rapport à l'autre et dans un sens opposé par rapport aux brosses (24) de ladite première paire.
